# EUROPEAN PATENT APPLICATION

(11) **EP 2 048 031 A1**
(43) Date of publication of application: **15.04.2009**
(21) Application number: 08152441.5
(22) Date of filing: 07.03.2008
(51) Int. Cl.: B60R 5/04

(54) **Loading floor of a vehicle**

(30) Priority: 11.10.2007 IT TO20070716
(71) Applicant: Saturno S.p.A, 10095 Grugliasco, Torino (IT)
(72) Inventor: Vaudano, Maurizio, 10095 Grugliasco (Torino) (IT); Fusaro, Luca, 10095 Grugliasco (Torino) (IT); Dulcis, Ignazio, 10095 Grugliasco (Torino) (IT)
(74) Representative: Marchitelli, Mauro

(57) **Abstract**

A loading floor for the luggage compartment of a vehicle, including:
- a stationary support, provided on which is a guide channel (4), and
- a rigid panel (2), which has on one side a first pin (5) engaging with the guide channel (4), said pin being displaceable within the channel between a first position, in which the panel (2) is set in a lowered horizontal position, and a second position, in which the panel (2) is set in a raised horizontal position.

The loading floor is characterized in that the rigid panel (2) has a second pin (6) on the same side, set in which is the first pin (5), and in that the guide channel (4) includes a first branch (7, 12) and a second branch (8, 13), which can be displaced, respectively, within the aforesaid first and second branches (7, 12; 8, 13).

## Description

The present invention relates to a loading floor designed to be mounted in the rear luggage compartment (boot) of a vehicle. Solutions are known in which the loading compartment of the boot includes a rigid panel articulated to a stationary support about a horizontal axis. Defined underneath the panel is a housing having a limited height with respect to the overall height of the luggage compartment, in which objects of relatively small dimensions can be laid. The rigid panel forms a cover of the bottom housing and a resting surface of the luggage compartment. The oscillation of the rigid panel about its horizontal axis of articulation enables access to the bottom housing.

In the framework of the prior art, solutions have been devised for providing an improved loading floor that enables variation of the dimensions of the bottom housing.

For example, the patent No. EP 1 378 397 describes a guide device for a loading floor that can be adjusted in a vertical direction. In the device in question, a pin is displaceable within a guide that has an elongated and inclined portion that terminates at the top in an area corresponding to a horizontal portion designed to define a raised position of the loading surface. Moreover provided is an arrest element having two configurations of equilibrium assumed by the arrest element itself, respectively, in the raised position and the lowered position of the loading surface, where in the raised position the arrest element blocks the aforesaid pin within the horizontal portion.

Said solution presents the drawback of having to provide an arrest element with two positions of equilibrium, which considerably complicates the structure of the device.

Another solution that regards a loading floor that can be positioned at different heights is described in the patent application No. EP 1 728 684. The loading floor described in this patent application is sopported by two side guides, each of which has a zig-zag profile including horizontal parts set on top of one another that extend parallel to the longitudinal axis of the vehicle. The horizontal parts are radiused by inclined connection portions. The loading floor carries in an area corresponding to its two opposite sides cam elements having a substantially rectangular shape that engage the two side guides. Each guide moreover includes a recess in the area of radiusing between the horizontal parts and the inclined portions that enables the cam element to oscillate about an axis of a cylindrical projection provided on the cam element itself, according to an angle defined by the horizontal part or by the inclined part of the guide.

The solution in question presents the drawback of envisaging guides with which the loading floor engages, which have considerably complex conformations defining a scheme of movement of the resting surface, originated by the movement of the cam elements within the respective guide, which is equally elaborate. Furthermore, the movement envisaged for the resting surface of the arrangement in question is complicated and far from intuitive in so far as it includes a series of small oscillations of the loading floor that are difficult to follow by the user without incurring in continuous jamming.

The object of the present invention is to provide a loading floor that can be positioned at different heights and has a simple structure, which may be controlled for reaching the different operative positions according to a simple and intuitive manoeuvre.

The above object is achieved by providing a loading floor which has the characteristics specified in Claim 1.

The loading floor according to the present invention can be displaced from one to the other of the positions with different heights by means of a very simple manoeuvre that the user can perform with just one hand. In addition, in each of said positions the rigid panel can be raised for gaining access to the bottom housing, as in traditional solutions.

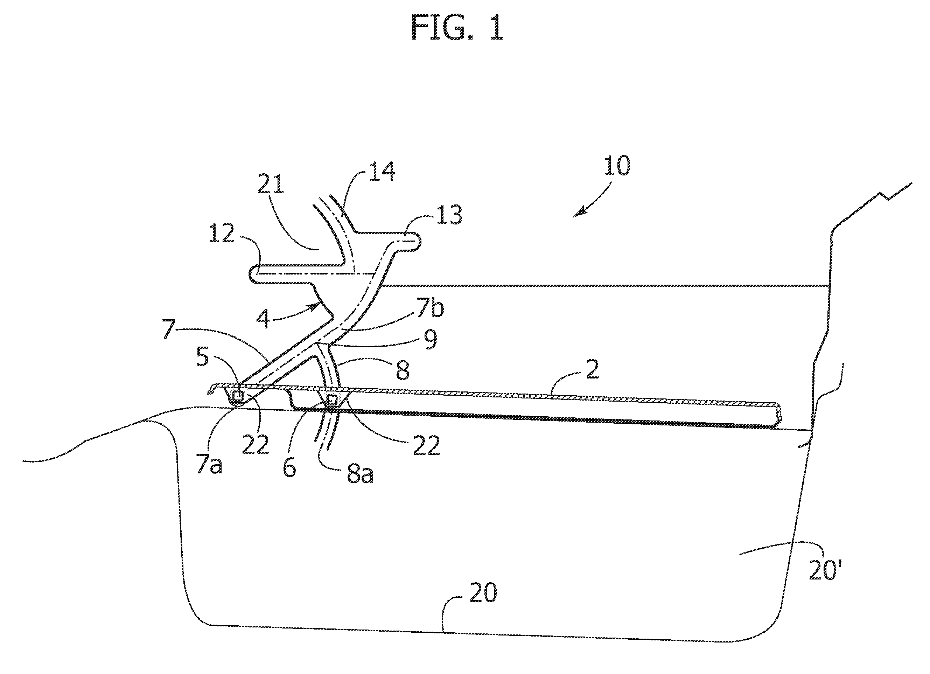

The present invention will now be described in detail with reference to the attached drawings, wherein Figures 1 to 4 are schematic cross-sectional views that illustrate the loading floor according to the present invention in different positions.

With reference to Figure 1, designated by 10 is a loading floor for the luggage compartment of a vehicle. The luggage compartment of the vehicle is delimited at the bottom by a wall 20 fixed with respect to the body of the vehicle.

The loading floor 10 includes a rigid panel 2 that forms the bottom horizontal resting surface of the luggage compartment. Defined between the rigid panel 2 and the bottom wall 20 of the luggage compartment is a housing 20', in which objects of relatively small dimensions can be arranged. The panel 2 constitutes both the bottom resting surface of the luggage compartment and the top cover of the housing 20'.

The loading floor 10 moreover includes a guide channel 4 that is made on each of the side walls 21 that delimit the rear luggage compartment of the vehicle in an area corresponding to their front portion, defined as the portion closest to the front side of the vehicle. The guide channel 4 has the function of supporting the rigid panel 2 and of guiding it in the displacements from one to the other of its operative positions, as will be described in detail in what follows.

The panel 2 has, at both of its sides facing the guide channels 4, a first pin 5 and a second pin 6. The pins 5 and 6 are both fixed to the panel 2 via respective flanges 22 that project underneath the panel and that anchor to the latter the pins 5 and 6, which project outwards substantially orthogonal to the direction (illustrated in the figures) of longitudinal extension of the panel. In addition, the pins 5 and 6 are set substantially on one and the same line parallel to said direction (illustrated in the figures) of longitudinal extension of the panel.

The rigid panel 2 is mounted so that the pins 5 and 6 engage the guide channels 4, the latter constituting a front support of the panel 2 within the luggage compartment.

Furthermore, in the operative positions that will be described in what follows, the panel 2 is prearranged for resting along its rear edge and/or along its side edges on resting surfaces provided on the rear or side walls of the luggage compartment.

The guide channels 4 extend on the respective side wall from a portion set corresponding to the bottom wall 20 of the luggage compartment up to a corresponding top portion in the configuration that will be described hereinafter.

Each guide channel 4 includes at the bottom a first branch 7 and a second branch 8, in which the pins 5 and 6, respectively, can be displaced. The branches 7, 8 starting from a respective end area extend upwards, inclined with respect to one another so as to converge in an area of intersection 9. In particular, the branch 7 extends starting from its end 7a with a rectilinear development inclined with respect to a horizontal direction. The branch 8 branches off, instead, from the end 8a underlying the end 7a according to a conformation such that the pin 6 is free to undergo displacement inside it so as to perform a movement of rotation with respect to the pin 5, which remains at the same time fixed on the distal end 7a of the branch 7, performing a movement of oscillation of the panel 2 with respect to the axis of the pin 5. For this purpose, the branch 8 preferably has a circumferential development in which the distal end 7a of the branch 7 defines the centre of curvature thereof. In particular, the branch 8 illustrated in the figures enables an oscillation of the inclined panel 2 with respect to the axis of the pin 5 starting from a negative inclination, where the pin 6 is underneath the horizontal line passing through the pin 5, up to a positive inclination, where the pin 6 occupies the area of intersection 9 above said horizontal line.

The guide channel 4 proceeds at the top beyond the portion 9 with a portion 7b of inclination equal to that of the branch 7, and subsequently widens out in an area 11, facing which is a substantially horizontal portion 12, which extends so as to set itself on top of the branches 7, 8. A second horizontal portion 13 faces the widened portion 11 above the horizontal portion 12 and extends with respect to the widened portion 11 in a direction opposite to that of the portion 12. The guide channel 4 terminates at the top with a further branch 14.

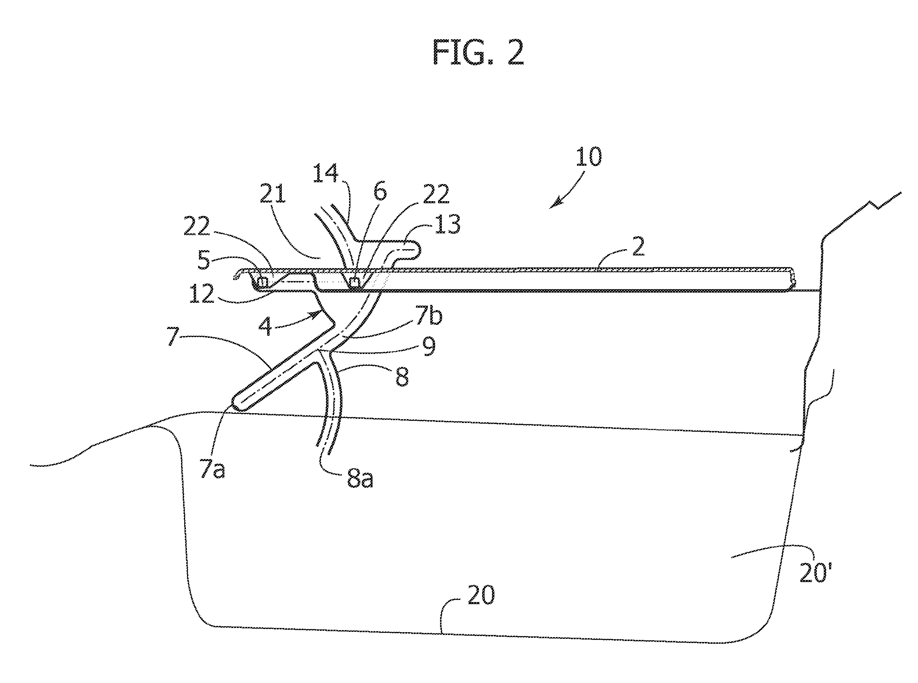

The end 12a of the horizontal portion 12 defines the position of the pin 5 such that the panel 2 is set in a raised operative horizontal position (Figure 1). The distal end 7a of the branch 7 otherwise defines the position of the pin 5 such that the panel 2 is set in a lowered operative horizontal position (Figure 2).

Specifically, when the panel 2 is in the lowered position the pin 5 is set on the distal end 7a of the branch 7, and the panel 2 is kept horizontal, resting along its rear edge and/or along its side edges on resting surfaces provided on the rear or side walls of the luggage compartment.

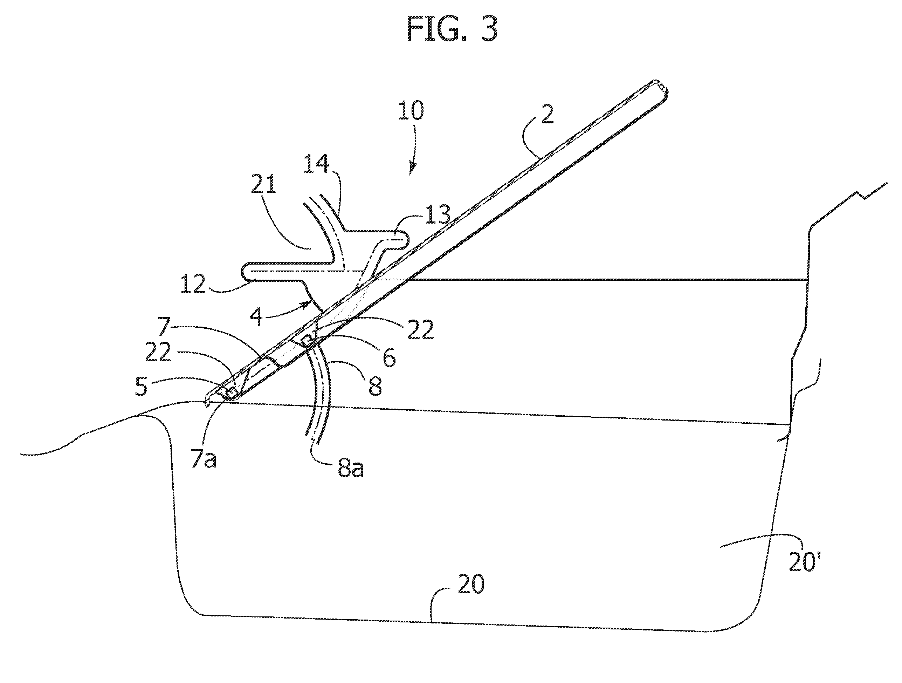

To lift and set the panel 2 in the raised operative position, it is made to turn in a counterclockwise direction (as viewed in the figures) manually by the user in such a way that the pin 6 moves within the branch 8 giving out in the area 9, where the branches 7 and 8 converge (Figure 3). At the same time, the pin 5 remains on the distal end 7a of the branch 7, as described previously.

Next, the user pulls towards himself the panel 2, which translates towards the rear part of the luggage compartment, likewise causing the pins 5 and 6 to displace within the channel 4. In particular, the panel 2 initially translates in an inclined direction like the branch 7, when the pin 6 is in contact with the portion 7b of the channel 4, and subsequently according to a variant orientation defined by the rear edge 11a (the right edge 11a, as viewed in the figures) of the widened portion 11. Said edge 11a is shaped in such a way as to guide the pin 6, which is kept in contact with the edge itself by the pulling action exerted by the user, within the horizontal portion 13.

The portion 13 is positioned so that it faces a top portion of the widened area 11 distant in a straight line from the end of the area 7b that gives out into the widened area 11 at least by a value such that when the pin 6 enters the portion 13 the pin 5 in the meantime has entered the widened portion 11. The latter has a width such as to enable the pin 5 to perform a movement of rotation about the axis of the pin 6, which remains within the horizontal portion 13 so that it rises within the horizontal portion 12. Said movement of rotation in a clockwise direction as viewed in the figures is generated by the action of rotation imparted by the user on the panel 2. The user, who at the same time is performing the aforesaid pulling action, is induced to perform said action of rotation starting from when the pin 6 enters the portion 13, as a result of the "sharp" variation of development between the edge 11a and the portion 13 that causes the action of pulling by the user to correspond to a lever movement of the panel 2 with respect to the pin 6.

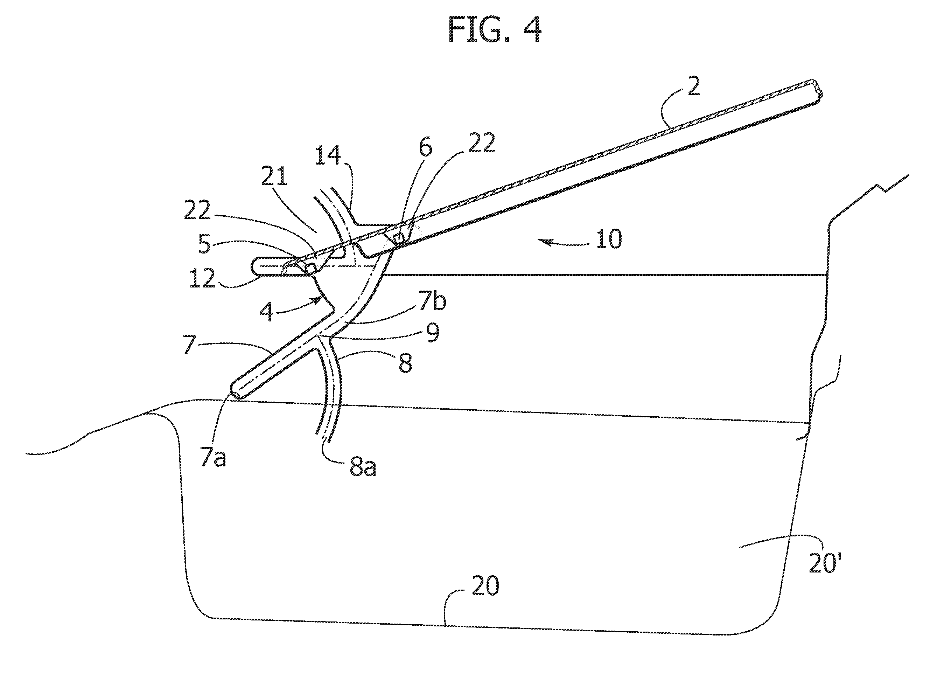

Once the pin 5 has entered the horizontal portion 12 (Figure 4) the user, by pushing the panel 2, brings the pin 5 into the aforesaid position corresponding to the raised operative position of the panel 2, in which the pin 5 is set in the proximity of the end 12a of the horizontal portion 12. In an area corresponding to its raised position, the panel 2 rests along its rear edge and/or along its side edges on resting surfaces provided on the rear or side walls of the luggage compartment.

The further branch 14 enables the pin 6 to turn with respect to the axis of the pin 5 that remains within the horizontal portion 12 so that the panel 2, in the raised position, can, however, be inclined, as desired, for enabling access to the housing underlying the panel itself. For this purpose, the branch 14 preferably has a circumferential development whereby the distal end 12a of the horizontal portion 12 defines the centre of curvature of said curvilinear development.

The loading floor described herein has a structure that enables a displacement thereof between a lowered horizontal position and a raised horizontal position in a way that is controlled and at the same time simple and intuitive for the user thanks to the fact that it envisages two distinct pins of the loading floor that interact with distinct guide branches of the support of the loading floor itself.

The user, just with the movement of his hand starting from the lowered horizontal position or from the raised horizontal position, can control raising of the rigid panel 2 in an inclined position, as mentioned previously in order to gain access to the underlying housing, or else can control passage to the other of the two aforesaid horizontal positions. In addition, in either position, the panel 2 rests along its rear edge and/or along its side edges on resting surfaces provided on the rear or side walls of the luggage compartment.

Of course, without prejudice to the underlying principle of the invention, the details of construction and the embodiments may vary widely with respect to what is described and illustrated herein, without thereby departing from the scope of the present invention, as defined by the ensuing claims.

## Claims

1. A loading floor for the luggage compartment of a vehicle, including:
- a stationary support, provided on which is a guide channel (4); and
- a rigid panel (2), which has on one side at least one first pin (5) engaging with said guide channel (4), said pin being displaceable within said channel between a first position, in which the panel (2) is set in a lowered horizontal position, and a second position, in which the panel (2) is set in a raised horizontal position, said loading floor being **characterized in that** said rigid panel (2) has a second pin (6) on the same side, set in which is said at least one first pin (5), and **in that** said guide channel (4) includes a first branch and a second branch (7, 12; 8, 13), in which said first and second pins (5, 6) can be displaced, respectively, within said first and second branches (7, 12; 8, 13).

2. The loading floor according to Claim 1,
**characterized in that**, in said lowered horizontal position of the panel (2), said first and second pins (5, 6) are set, respectively, within said first and second branches (7, 8), the distal end (7a) of said first branch defining said first position of said first pin (5).

3. The loading floor according to Claim 2,
**characterized in that** said first and second branches (7, 8) of said guide channel (4) converge on one and the same portion (9) of the guide channel (4).

4. The loading floor according to Claim 3,
**characterized in that** said channel (4) envisages a portion (12) that extends in a substantially horizontal direction, the distal end (12a) of said portion defining said second position of said first pin (5).

5. The loading floor according to Claim 1,
**characterized in that** said guide channel (4) includes a further substantially horizontal portion (13), within which said second pin (6) sets itself during the displacement of said first pin (5) between said first and second positions.

6. The loading floor according to Claim 1,
**characterized in that** said guide channel (4) includes a further branch (14), within which said second pin can undergo displacement when said first pin (5) is in said second position.

7. The loading floor according to Claim 1,
**characterized in that** said second branch (8) has a substantially curvilinear development.

8. The loading floor according to Claim 7,
**characterized in that** said second branch (8) has a circumferential development, the distal end (7a) of said first branch (7) defining the centre of curvature of said curvilinear development.

9. The loading floor according to Claim 6,
**characterized in that** said further branch (14) has a circumferential development, the distal end (12a) of said horizontal portion (12) defining the centre of curvature of said curvilinear development.
